# EUROPEAN PATENT APPLICATION

(11) **EP 4 174 254 A1**
(43) Date of publication of application: **03.05.2023**
(21) Application number: 21842922.3
(22) Date of filing: 09.07.2021
(51) Int. Cl.: E04G 21/18, G01C 15/00

(54) **BATTER BOARD INSTALLATION METHOD, BATTER BOARD INSTALLATION PROGRAM AND SURVEYING SYSTEM**

(30) Priority: 14.07.2020 JP 2020120939
(71) Applicant: Topcon Corporation, Tokyo 174-8580 (JP)
(72) Inventor: NISHI, Yoshihiro, Tokyo 174-8580 (JP); SATO, Kohei, Tokyo 174-8580 (JP); MIYAJIMA, Motohiro, Tokyo 174-8580 (JP)
(74) Representative: Schmitt-Nilson Schraud Waibel Wohlfrom Patentanwälte Partnerschaft mbB
(86) International application number: PCT/JP2021/026019
(87) International publication number: WO 2022/014506

(57) **Abstract**

A method uses a surveying system 1 including a surveying device 200 and a terminal device 100 communicative with the surveying device 200, and includes: acquiring an altitude of a benchmark serving as a reference height on a batter board; acquiring a first altitude difference between the benchmark and a current ground line; acquiring a second altitude difference between the current ground line and a beam top position on the batter board stake; acquiring an altitude of a stake top of a batter board stake installed, by measuring the altitude of the stake top; calculating a third altitude difference between the stake top of the batter board stake and the beam top position based on the altitude of the benchmark, the first and second altitude differences, and the altitude of the stake top; and displaying the third altitude difference en a screen unit of the terminal device.

## Description

### BACKGROUND

The present disclosure relates to a batter board setting method, a batter board setting program, and a surveying system.

### BACKGROUND ART

At a construction site, stakes may be driven as temporary frameworks and an altitude common among the stakes is marked by means including "batter boards." "Batter boards" are for determining the positions of columns and walls before the start of construction and are obtained by placing stakes and beams at necessary points prior to foundation construction in order to set the horizontal lines or other indicators of the foundations of concrete or other buildings.

Various jigs for setting batter boards are known (Patent Document 1).

### CITATION LIST

### PATENT DOCUMENT

Patent Document 1: Japanese Unexamined Patent Publication No. H11-241509

### SUMMARY OF THE INVENTION

### TECHNICAL PROBLEMS

At a construction site, however, information and communications technology (ICT) has been more widely utilized and more efficient works are required. Each batter board includes a plurality of batter board stakes each with a mark indicating the position of a corresponding beam top. The altitude indicated by the marks needs to be basically common among all batter board stakes. However, since the lengths of the stakes to be used and the depths of the stakes driven into the ground by manual work vary, the work of making the marks to a common altitude is not easy. In particular, on-site data management of various design information for calculating the altitude of the marks is often such that not all the information for calculating the altitude of the marks is locally available on site, and therefore, calculating the altitude difference between the stake tops and the marks is not easy.

One aspect of the present disclosure was made under the circumstances. It is an object of the present disclosure to provide a batter board setting method, a batter board setting program, and a surveying system that allow making of marks indicating an altitude common among a plurality of stakes installed at a construction site.

### SOLUTION TO THE PROBLEMS

In order to achieve the object, a batter board setting method according to the present disclosure is a batter board setting method of setting a batter board including a batter board stake, using a surveying system including a surveying device and a terminal device communicative with the surveying device, the terminal device including an input unit and a screen unit, the batter board setting method including: performing benchmark altitude acquisition including acquiring an altitude of a benchmark that serves as a reference height of the batter board, by use of a benchmark altitude acquisition section of the terminal device; performing first altitude difference acquisition including acquiring a first altitude difference that is an altitude difference between the benchmark and a current ground line, by use of a first altitude difference acquisition section; performing second altitude difference acquisition including acquiring a second altitude difference that is an altitude difference between the current ground line and a beam top position on the batter board stake, by use of a second altitude difference acquisition section; performing stake top altitude acquisition including acquiring an altitude of a stake top of the batter board stake installed, by use of a stake top altitude acquisition section, the altitude of the stake top being surveyed by use of the surveying device; performing third altitude difference calculation including calculating, by use of a third altitude difference calculation section, a third altitude difference that is a height difference between the stake top of the batter board stake and the beam top position, based on the altitude of the benchmark acquired in the benchmark altitude acquisition, the first altitude difference acquired in the first altitude difference acquisition, the second altitude difference acquired in the second altitude difference acquisition, and the altitude of the stake top acquired in the stake top altitude acquisition; and performing third altitude difference display including displaying the third altitude difference on the screen unit of the terminal device.

In order to achieve the object, a surveying system according to the present disclosure is for assisting setting of a batter board including a batter board stake, the surveying system including: a surveying device and a terminal device communicative with the surveying device, the terminal device including an input unit and a screen unit, and including; a benchmark altitude acquisition section configured to acquire an altitude of a benchmark that serves as a reference height of the batter board from information input from the input unit or surveying information transmitted from the surveying device to the terminal device; a first altitude difference acquisition section configured to acquire a first altitude difference that is an altitude difference between the benchmark and a current ground line input from the input unit; a second altitude difference acquisition section configured to acquire a second altitude difference that is an altitude difference between the current ground line and a beam top position on the batter board stake input from the input unit; a stake top altitude acquisition section configured to acquire an altitude of a stake top of the batter board stake installed, the altitude of the stake top being surveyed by use of the surveying device; a third altitude difference calculation section configured to calculate a third altitude difference that is a height difference between the stake top of the batter board stake and the beam top position based on the altitude of the benchmark, the first altitude difference, the second altitude difference, and the altitude of the stake top; and a third altitude difference display section configured to display the third altitude difference on the screen unit of the terminal device.

In order to achieve the object, a batter board setting program according to the present disclosure is a program for setting a batter board including a batter board stake, using a surveying system including a surveying device and a terminal device communicative with the surveying device, the batter board setting program causing: a benchmark altitude acquisition section of the terminal device to perform benchmark altitude acquisition including acquiring an altitude of a benchmark that serves as a reference height of the batter board; a first altitude difference acquisition section of the terminal device to perform first altitude difference acquisition including acquiring a first altitude difference that is an altitude difference between the benchmark and a current ground line; a second altitude difference acquisition section of the terminal device to perform second altitude difference acquisition including acquiring a second altitude difference that is an altitude difference between the current ground line and a beam top position on the batter board stake; a stake top altitude acquisition section of the terminal device to perform stake top altitude acquisition including acquiring an altitude of a stake top of the batter board stake installed, the altitude of the stake being surveyed by use of the surveying device; a third altitude difference calculation section of the terminal device to perform third altitude difference calculation including calculating a third altitude difference that is a height difference between the stake top of the batter board stake and the beam top position, based on the altitude of the benchmark acquired in the benchmark altitude acquisition, the first altitude difference acquired in the first altitude difference acquisition, the second altitude difference acquired in the second altitude difference acquisition, and the altitude of the stake top acquired in the stake top altitude acquisition; and a screen unit of the terminal device to perform third altitude difference display including displaying the third altitude difference.

### ADVANTAGES OF THE INVENTION

The batter board setting method and the surveying system according to the present disclosure allow an operator to set batter boards more efficiently at a construction site.

### BRIEF DESCRIPTION OF THE DRAWINGS

FIG. 1 illustrates a batter board at a construction site.
FIG. 2 is a configuration diagram of a surveying system according to an embodiment of the present disclosure.
FIG. 3 illustrates the relationship between a batter board stake and the altitude of a benchmark.
FIG. 4 is a flowchart showing a processing flow according to one embodiment of the present disclosure.
FIG. 5 illustrates an example screen.
FIG. 6 illustrates another example screen.
FIG. 7 illustrates yet another example screen.
FIG. 8 illustrates further another example screen.
FIG. 9 shows still another example screen.

### DESCRIPTION OF EMBODIMENTS

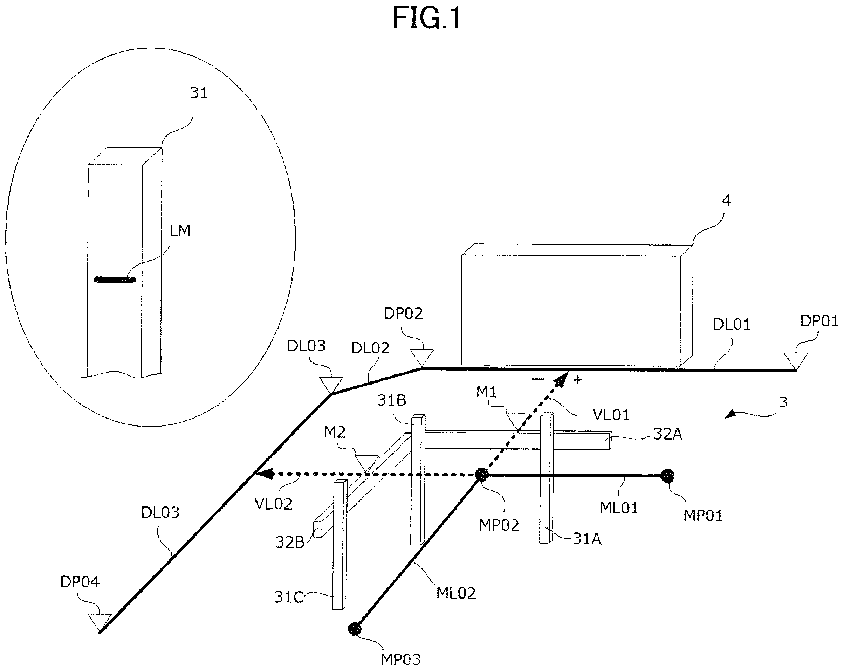

One embodiment of the present disclosure will be described below with reference to the drawings. FIG. 1 illustrates setting a batter board at a construction site. As described above, "batter boards" are for determining the positions of columns and walls before the start of construction and are temporary frameworks prepared by placing stakes and beams at necessary points prior to foundation construction in order to set the horizontal lines or other indicators of the foundations of buildings, which are made from concrete or the like. A series of works using the batter boards is also referred to as "setting batter boards." The batter boards become unnecessary after setting marks, such as reference marks, on an immovable object as a reference and are eventually removed. For example, a batter board 3 is a corner batter board including batter board stakes 31A, 31B, and 31C and batter board beams 32A and 32B. Such corner batter boards are placed at four corners of a building, in the case where the building is rectangular. Across the facing corner batter boards, leveling strings are stretched out. In the present disclosure, the batter board stakes 31A, 31B, and 31C have the same functions and are collectively referred to as the "batter board stakes 31" without distinction. Similarly, the batter board beams 32A and 32B are also collectively referred to as "batter board beams 32". The batter board stakes 31 are stakes driven into the ground for setting a batter board, and may be referred to as *Mizukui* or *Kentokui* in Japanese. Each batter board beam 32 is a horizontal plate indicating the altitude of a foundation marked on a batter board stake 31 and placed with its upper end aligned with a beam top position, and batter board beams may be referred to as *Mizunuki* in Japanese.

Each batter board stake 31 is provided with a mark LM drawn thereon, the mark LM indicating a beam top position. This mark LM is also referred to as a "horizontal mark". The mark LM indicates the altitude (reference height) of a building foundation.

Provided inside the batter board 3 are the leveling strings (not shown). The leveling strings are real strings that stretch out between the facing batter board beams in setting a batter board and show a horizontal. The leveling strings may be nylon or polyethylene strings or piano wires. The leveling strings indicate a height that is the altitude of the building foundation. In this figure, lines ML01 and ML02 indicate positions at which leveling strings are to stretch, as design information set in advance and are referred to as "reference sides" of the leveling strings. For setting the reference sides, foundation points MP01, MP02, and MP03 are set as design information. These foundation points can be start points or end points of the reference sides, and serves as so-called design drawings of the leveling strings.

The leveling strings are stretched out across the facing batter board beams 32 by being fixed to fixing points on the batter board beams 32 by nailing or any other suitable means. In this figure, a leveling string is stretched out between the batter board beam 32A and another batter board beam facing thereto of a corner batter board (not shown). The upper end positions (i.e., the beam tops) of the batter board beams 32 have the same height as the altitude of the leveling strings. In order to accurately align the batter board beams 32 with the positions, marks LM are made at the beam top positions on the batter board stakes 31.

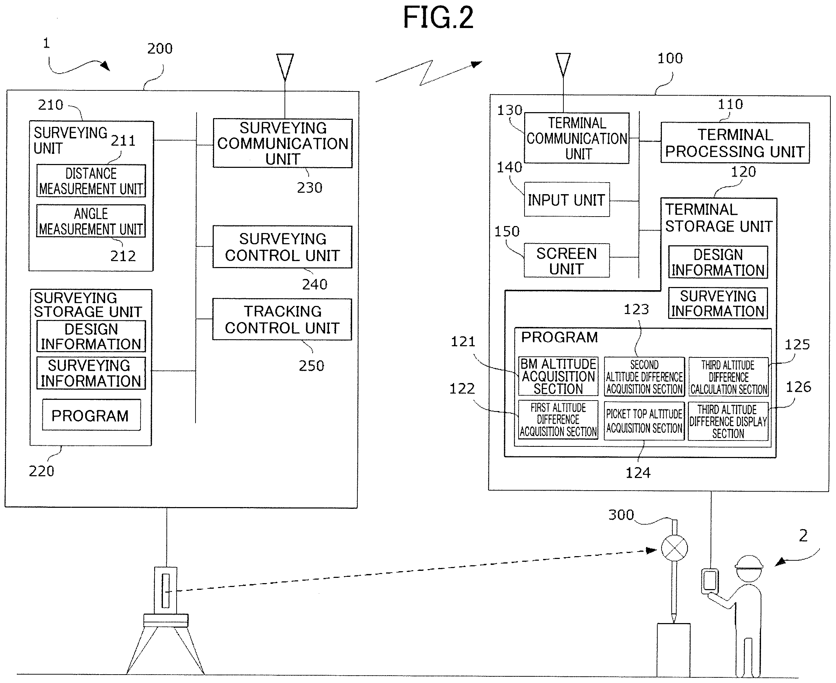

FIG. 2 is a configuration diagram of a surveying system according to the embodiment of the present disclosure. As shown in this figure, a surveying system 1 includes a surveying device 200, a terminal device 100, and a survey target device 300.

The surveying device 200 may be, according to one embodiment, a surveying instrument of total station (TS)-equivalent light wave type on known position coordinates, for example. The "TS-equivalent light wave type" includes, in addition to the TS, non-telescopic light wave-based measurement instruments capable of performing measurement equivalent to that is performed by the TS equipped with an automatic tracking function. The surveying device 200 can automatically track the survey target device 300 as a survey target, so that, by tracking the survey target device 300, the surveying device 200 can survey a desired point at which the survey target device 300 is placed. The survey target device 300 includes an optical element that reflects the light radiated from the surveying device 200 back to the surveying device 200. That is, the optical element is what is called a "retroreflective prism." The survey target device 300 may be a surveying pole with a known length and with the retroreflective prism provided thereon.

Note that the surveying device 200 and the survey target device 300 are configured as physically individual hardware but as being capable of fulfilling the function of surveying in cooperation with each other. Therefore, the survey target device 300 may be interpreted as a part of the configuration of the surveying device 200.

The surveying device 200 includes a horizontal rotation driving unit and a telescope unit on the horizontal rotation driving unit with a vertical rotation driving unit interposed therebetween. The horizontal rotation driving unit is supported by a tripod and drives horizontal rotation. The vertical rotation drive unit is vertically rotatable. Although not shown, the surveying device 200 includes an angle measurement unit 212a including horizontal angle detector and a vertical angle detector. The horizontal angle detector detects the horizontal rotation angle, whereas the vertical angle detector detects the vertical rotation angle. The use of these horizontal and vertical angle detectors makes it possible for the surveying device 200 to measure the horizontal and vertical angles of the collimation direction, respectively.

The surveying device 200 further includes, as distance measurement units 211, for example, an electro-optical distance meter that measures the slope distance to the survey target device 300. For the sake of convenience, these angle and distance measurement units 212 and 211 are collectively referred to as a "surveying unit 210."

The surveying device 200 further includes a surveying storage unit 220, a surveying communication unit 230, a surveying control unit 240, and a tracking control unit 250.

The surveying storage unit 220 stores, in advance, various programs for the surveying, tracking, or other controls; or information (e.g., the altitude) on the ground to be used at a construction site, design information, or other information.

The surveying communication unit 230 is communicative with external devices such as the terminal device 100 and is, for example, a wireless communication means.

The surveying control unit 240 has the function of controlling the surveying by the surveying device 200. More specifically, the surveying control unit 240 automatically or manually collimates the survey target device 300. The surveying control unit 240 detects the horizontal angle, the vertical angle, and the slope distance between the surveying device 200 and the survey target device 300 using the angle measurement units (i.e., the horizontal and vertical angle detection units) 212 and the distance measurement units 211 described above. Here, the retroreflective prism as an example of the survey target device 300 is attached to a pole. The distance from the prism to a distal end of the pole is known. Accordingly, the surveying control unit 240 calculates out, as surveying results, the position of the distal end (i.e., the position of the upper or lower end) of the pole by correcting the horizontal angle, vertical angle, and slope distance detected by the angle and distance measurement units 212 and 211.

The tracking control unit 250 is configured to control the drive of the horizontal and vertical rotation driving units in such a way that tracking light emitted from a tracking unit and then reflected from the survey target device 300 is continuously received by the tracking control unit 250.

Another embodiment of the surveying device 200 is a GNSS surveying instrument. In this case, surveying is performed using a GNSS receiver as the survey target device 300.

Examples of the terminal device 100 include a smartphone, a feature phone, a tablet, a handheld computer device (e.g., a personal digital assistant (PDA)), and a wearable terminal (e.g., a glasses-type device or a watch-type device). A general-purpose terminal is, with application software installed, usable as the portable display terminal of this embodiment. Such the terminal device 100 includes a screen unit 150 and is easily carriable at a work site. The screen unit 150 may be viewed while the terminal device 100 is carried in a hands-free way or in one hand. The terminal device 100 may also include an internal power supply such as a battery and may thus be operatable for a certain period without requiring external power supply.

The terminal device 100 includes a terminal communication unit 130, a terminal storage unit 120, a terminal processing unit 110, an input unit 140, and the screen unit 150.

Although not shown, the terminal processing unit 110 executes the functions and/or methods implemented by codes or commands included in the programs stored in the terminal storage unit 120. Examples of the terminal processing unit 110 include a central processing unit (CPU), a microprocessor unit (MPU), a graphics processing unit (GPU), a microprocessor, a processor core, a multiprocessor, an application specific integrated circuit (ASIC), and a fieldprogrammable gate array (FPGA). The terminal processing unit 110 may include a logic circuit or a dedicated circuit formed in an integrated circuit, for example, to execute the processing disclosed in the embodiment. These circuits may be one or more integrated circuits. A single integrated circuit may execute the plural types of processing described in the embodiment. Although not shown, the terminal device 100 may include a main storage unit that temporarily stores the programs to be read out from the terminal storage unit 120 and provides a workspace to the terminal processing unit 110.

The terminal communication unit 130 is communicative with the surveying communication unit 230 of the surveying device 200, and is capable of receiving, for example, a surveying result obtained by surveying the survey target device 300 by the surveying device 200 or positional information (a horizontal angle, a vertical angle, and a slope distance to the pole end) calculated by the surveying control unit 240. The calculation of the positional information according to the surveying results may be performed by the surveying device 200 or by the terminal device 100. The communications may be wired or wireless. Any communication protocol may be used to establish the communications between the surveying device 200 and the terminal device 100, as long as mutual communications can be established therebetween.

The input unit 140 is any one or a combination of all types of devices capable of receiving inputs from a user, that is, an operator 2 and providing the information related to the inputs to the terminal processing unit 110. Examples of the input unit 140 include, in addition to a hardware input means such as buttons, a software input means displayed on the display unit, such as a touch panel, a remote controller, or an audio input means such as a microphone.

The screen unit 150 is any one or a combination of all types of devices capable of displaying a screen. Examples include a flat display such as a liquid crystal display or an organic light-emitting diode (OLED) display, a curved display, a folding screen on a foldable terminal, a head-mounted display, or a device displayable through projection on a substance using a small projector.

The terminal storage unit 120 has the function of storing various necessary programs or various necessary data. In addition, the terminal storage unit 120 can store the surveying information received by the terminal communication unit 130 and the position information calculated based on the surveying information. For example, the terminal storage unit 120 stores information (e.g., the altitude) on the ground, design information, or other information, which are used at a construction site or the like. The terminal storage unit 120 is any of various storage media such as a hard disk drive (HDD), a solid state drive (SSD), and a flash memory.

The design information includes design drawings necessary for construction works. Examples of the construction works include constructions of structures such as buildings, roads, railroads, tunnels, bridges, ditches, waterways, and rivers. The design drawing includes data on points such as foundation points and boundary points, data on lines such as foundation reference sides and boundary reference sides, and other data.

The terminal storage unit 120 stores, as application software programs, a benchmark (BM) altitude acquisition section 121, a first altitude difference acquisition section 122, a second altitude difference acquisition section 123, a stake top altitude acquisition section 124, a third altitude difference calculation section 125, and a third altitude difference display section 126 that fulfill various functions.

The BM altitude acquisition section 121 has the function of acquiring the altitude of the BM from any one of the surveying information input from the input unit 140 of the terminal device 100, the surveying information received by the terminal communication unit 130, or the design information stored in the terminal storage unit 120; and storing the altitude in the terminal storage unit 120.

The first altitude difference acquisition section 122 has the function of acquiring the altitude difference (first altitude difference) between the BM and the GL from any one of the surveying information input from the input unit 140 of the terminal device 100, the surveying information received by the terminal communication unit 130, and the design information stored in the terminal storage unit 120; and storing the altitude difference in the terminal storage unit 120.

The second altitude difference acquisition section 123 has the function of acquiring the altitude difference (second altitude difference) between the GL and the beam top from any one of the surveying information input from the input unit 140 of the terminal device 100, the surveying information received by the terminal communication unit 130, and the design information stored in the terminal storage unit 120; and storing the altitude difference in the terminal storage unit 120.

The stake top altitude acquisition section 124 has the function of acquiring the altitude of each batter board stake 31 from the surveying information surveyed by the surveying device 200 and received by the terminal communication unit 130; and storing the altitude in the terminal storage unit 120.

The third altitude difference calculation section 125 has the function of calculating out a third altitude difference that is a height difference between the stake top of the batter board stake and the beam top position based on the altitude of the benchmark, the first altitude difference, the second altitude difference, and the altitude of the stake top.

The third altitude difference display section 126 has the function of displaying the third altitude difference on the screen unit 150 of the terminal device 100.

Now, an outline of a batter board setting function will be described, which is one aspect of the batter board setting method, the batter board setting program, and the surveying system according to the embodiment of the present disclosure.

As shown in FIG. 1, the batter board 3 includes a plurality of batter board stakes 31 each with a mark LM indicating a beam top position. The altitude indicated by the marks LM is basically common among all the batter board stakes 31. However, since the lengths of the stakes to be used and the depths of the stakes driven by manual work vary, the work of making the marks LM to a common altitude is not easy.

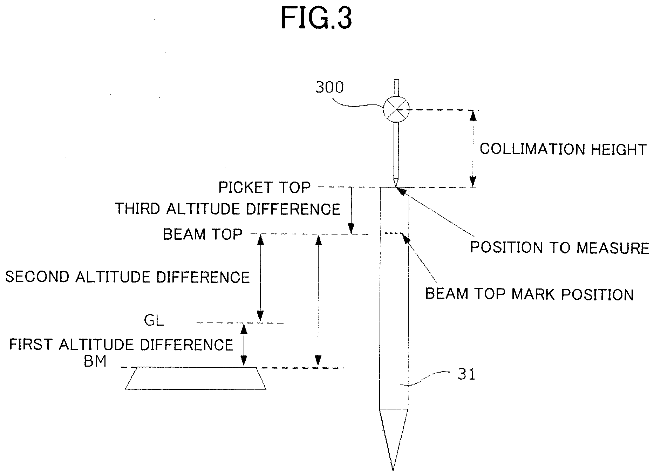

A procedure for making the marks LM to such batter board stakes 31 evenly and accurately will be described with reference to FIG. 3. FIG. 3 illustrates the relationship in the altitude between a batter board stake and a benchmark. In this figure, the vertical direction of the figure represents the height direction of the batter board stake 31. First, the lengths of the plurality of driven batter board stakes 31 and the altitudes of the stake tops are unknown. The position (including altitude) of the benchmark BM at the site is known and included in the design information, or can be measured at a site. The altitude difference (first altitude difference) between the BM and the GL that is the current ground and the altitude difference (second altitude difference) between the GL and the beam top are known. On-site data management at a construction site is such that information is stored in various places in various ways, such as being stored as data in the surveying storage unit 220 of the surveying device 200 or the terminal storage unit 120 of the terminal device 100, or being recorded on paper documents.

Here, the operator measures the altitude of the stake top using the surveying device 200 and the survey target device 300. Once the altitude of the stake top is found out by the measurement, it becomes possible to calculate out the altitude difference between the known BM and the GL, the altitude difference between the GL and the beam top, and the altitude difference (third altitude difference) between the stake top and the beam top.

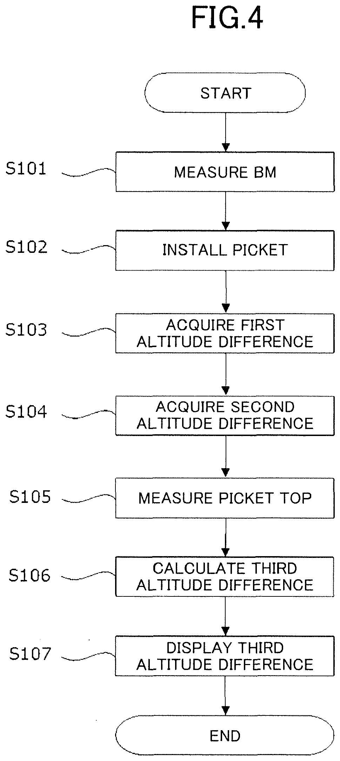

FIG. 4 is a flowchart illustrating a processing flow in a batter board setting method and a batter board setting program using the surveying system according to this embodiment.

First, in step S101, an operator places the surveying device 200 at a site, thereby setting the device point of the surveying device 200, and then surveys the benchmark (BM) and stores the altitude of the BM as a known value in the surveying storage unit 220 or in the terminal storage unit 120.

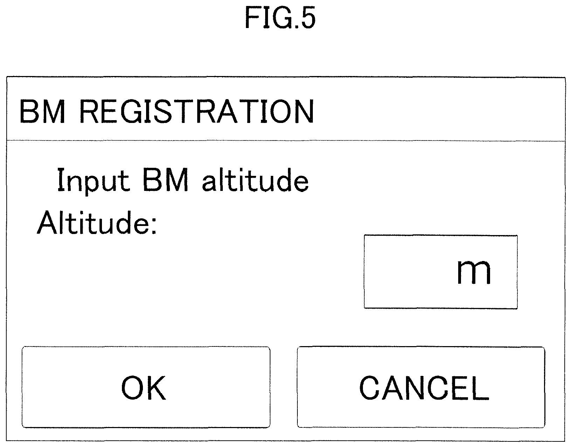

FIG. 5 is an example screen to be displayed on the screen unit 150 of the terminal device 100, for inputting and registering the altitude of the BM. The operator 2 operates the input unit 140 of the terminal device 100 to input and store the known altitude of the BM. The BM may be surveyed using the surveying device 200 and an actual measurement value may be observed and input.

Next, in step S102, the operator sets a plurality of batter board stakes 31 at the site. The batter board stakes 31 are driven by manual work at a position determined in advance as design information.

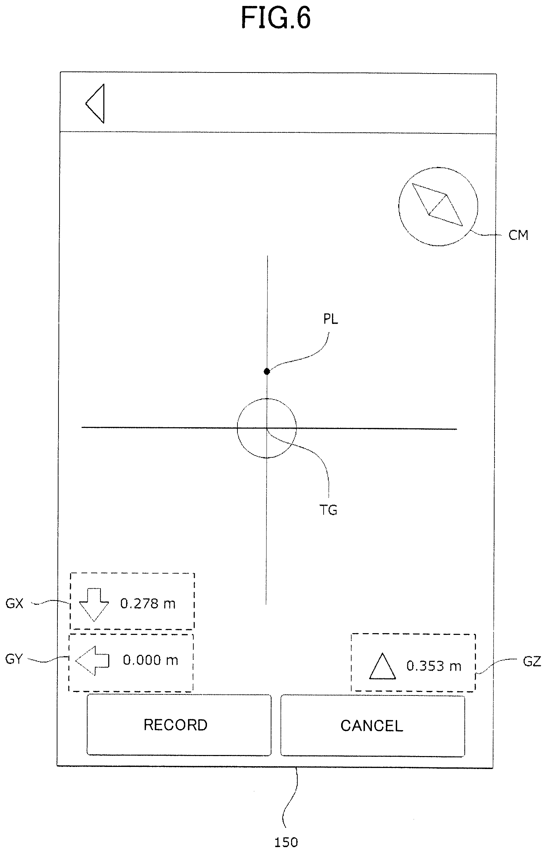

FIG. 6 is an example screen to be displayed on the screen unit 150 of the terminal device 100, for assisting the manual driving of stakes. The operator 2 selects a stake driving position from among stake driving points stored as design information. The operator 2 then approaches the position, while holding the survey target device 300. The surveying device 200 surveys the position of the survey target device 300, while automatically tracking the survey target device 300, and transmits surveying information to the terminal device 100. The terminal device 100 displays the position TG at which a stake is to be driven as determined as design information, the current position PL of the survey target device 300, and the difference between the position TG and the current position PL on the screen unit 150. In this figure, the difference is shown as a difference display GX in the X-direction and a difference display GY. In addition, orientation display CM and a difference display GZ in the Z-direction may be provided to assist the operator.

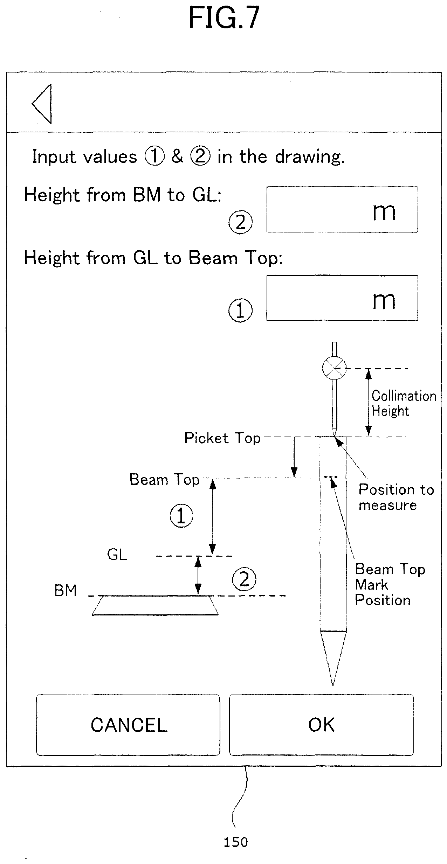

Next, in step S103, information for calculating an altitude difference from the stake top for indicating a mark LM on the batter board stake 31 is acquired. FIG. 7 is an example screen to be displayed on the screen unit 150 of the terminal device 100 as the first and second altitude difference acquisition sections 122 and 123, for acquiring the information for calculating the altitude difference (third altitude difference) from the stake top to the beam top. This screen displays an area for inputting two types of altitude differences for calculating the altitude difference between the BM and the beam top. For example, if the input unit 140 of the terminal device 100 is a touch panel, a box next to the display "Height from BM to GL: (2)" is tapped to input the first altitude difference as a numerical value using a software keyboard or any other suitable means.

Then, in step 104, similarly, a box next to the display "Height from GL to Beam Top: (1)" is tapped to input the second altitude difference as a numerical value.

After that, in step S105, the altitude of the stake top of each batter board stake 31 is surveyed using the surveying system 1. The measured altitude of the batter board stake 31 is stored in the surveying storage unit 220 or the terminal storage unit 120 using the stake top altitude acquisition section 124. The altitude of each batter board stake 31 is stored individually in association with a predetermined identification code such as a point name or a stake number.

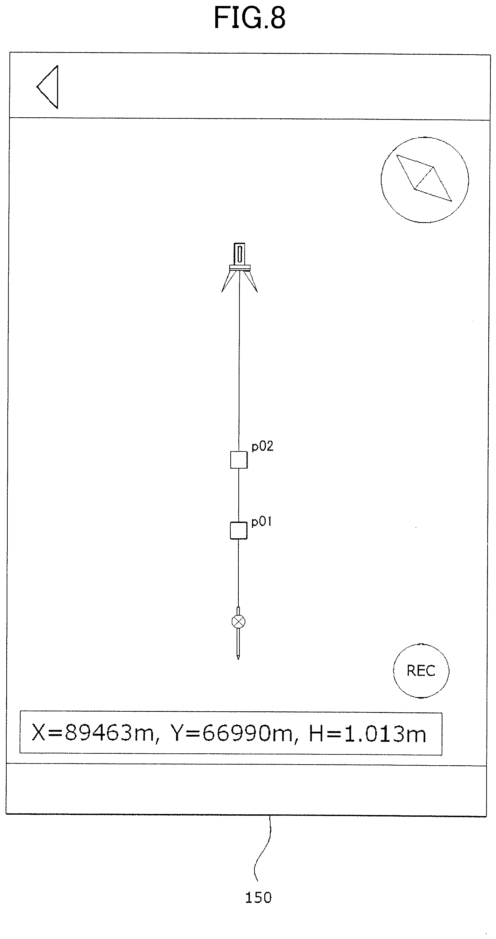

FIG. 8 is an example screen to be displayed on the screen unit 150 of the terminal device 100 for storing numerical values of the altitudes of the batter board stakes 31. This figure shows a result of surveying a predetermined stake top by an operator using the surveying device 200 and the survey target device 300. This result of surveying is stored in association with stake numbers such as p01 and p02 by pressing a "RECORD" button on the screen.

Next, in step S106, the terminal processing unit 110 causes the third altitude difference calculation section 125 to calculate the altitude difference (third altitude difference) from the stake top to the beam top position based on the following information stored in the surveying storage unit 220 or the terminal storage unit 120. The information includes the altitude difference (i.e., the first altitude difference) from the BM to the GL, the altitude difference (i.e., the second altitude difference) from the GL to the beam top, the altitude of the BM stored in step S101, and the altitude of the stake top stored in step S103.

Then, in step S107, the terminal processing unit 110 causes the third altitude difference display section 126 to display the calculated altitude difference (third altitude difference) from the stake top to the beam top position on the screen unit 150 of the terminal device 100.

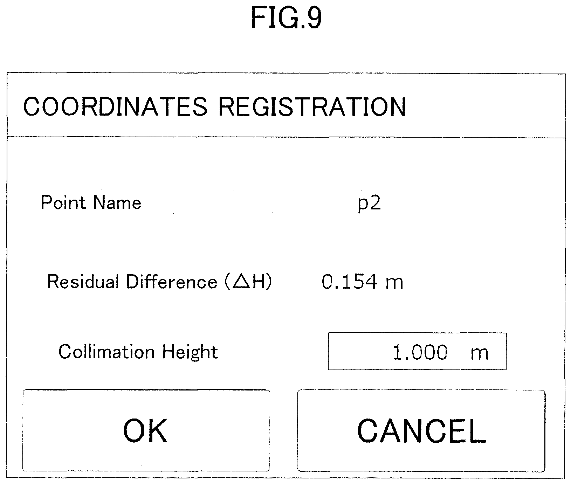

FIG. 9 is an example screen to be displayed on the screen unit 150 of the terminal device 100, for displaying the altitude difference (third altitude difference) between the stake top and the beam top position calculated by the third altitude difference calculation section 125. Here, this screen displays that a stake in a point name "p2" has an altitude difference (residual error (ΔH)) of 0.154 m from the stake top to the beam top position. The operator actually makes a mark LM on the batter board stake 31 based on the information on the altitude difference between the stake top and the beam top displayed on the screen unit 150. This operation is repeated for a plurality of batter board stakes 31.

As described above, in the batter board setting method according one embodiment of the present disclosure, the terminal device includes an input unit and a screen unit. The batter board setting method includes: performing benchmark altitude acquisition including acquiring an altitude of a benchmark that serves as a reference height of the batter board, by use of a benchmark altitude acquisition section of the terminal device; performing first altitude difference acquisition including acquiring a first altitude difference that is an altitude difference between the benchmark and a current ground line, by use of a first altitude difference acquisition section; performing second altitude difference acquisition including acquiring a second altitude difference that is an altitude difference between the current ground line and a beam top position on the batter board stake, by use of a second altitude difference acquisition section; performing stake top altitude acquisition including acquiring an altitude of a stake top of the batter board stake installed, by use of a stake top altitude acquisition section, the altitude of the stake top being surveyed by use of the surveying device; performing third altitude difference calculation including calculating, by use of a third altitude difference calculation section, a third altitude difference that is a height difference between the stake top of the batter board stake and the beam top position, based on the altitude of the benchmark acquired in the benchmark altitude acquisition, the first altitude difference acquired in the first altitude difference acquisition, the second altitude difference acquired in the second altitude difference acquisition, and the altitude of the stake top acquired in the stake top altitude acquisition; and performing third altitude difference display including displaying the third altitude difference on the screen unit of the terminal device. This configuration makes it possible that, even if the lengths of the stakes to be used and the depths of the stakes driven by manual work vary and not all the information for calculating the common altitude is locally available on site, values of such information can be calculated out on the terminal device so as to work out and display an altitude difference common among stakes having different lengths and driven in different depths, thereby making it possible for the operator to easily set batter boards at the site.

The embodiment of the present disclosure has been described above, but the aspects of the present disclosure are not limited to the embodiment.

### DESCRIPTION OF REFERENCE CHARACTERS

- 1: Surveying System
- 2: User
- 3: Batter Board
- 31: Batter Board Stake
- 32: Batter Board Beam
- 4: Off-Site Structure
- 100: Terminal Device
- 110: Terminal Processing Unit
- 120: Terminal Storage Unit
- 121: BM Altitude Acquisition Section
- 122: First Altitude Difference Acquisition Section
- 123: Second Altitude Difference Acquisition Section
- 124: Stake Top Altitude Acquisition Section
- 125: Third Altitude Difference Calculation Section
- 126: Third Altitude Difference Display Section
- 130: Terminal Communication Unit
- 140: Input Unit
- 150: Screen Unit
- 200: Surveying Device
- 210: Surveying Unit
- 211: Distance Measurement Unit
- 212: Angle Measurement Unit
- 220: Surveying Storage Unit
- 230: Surveying Communication Unit
- 240: Surveying Control Unit
- 250: Tracking Control Unit
- 300: Survey Target Device

## Claims

1. A batter board setting method of setting a batter board including a batter board stake, using a surveying system including a surveying device and a terminal device communicative with the surveying device, the terminal device including an input unit and a screen unit, the batter board setting method **characterized by** comprising:
performing benchmark altitude acquisition including acquiring an altitude of a benchmark that serves as a reference height of the batter board, by use of a benchmark altitude acquisition section of the terminal device;
performing first altitude difference acquisition including acquiring a first altitude difference that is an altitude difference between the benchmark and a current ground line, by use of a first altitude difference acquisition section;
performing second altitude difference acquisition including acquiring a second altitude difference that is an altitude difference between the current ground line and a beam top position on the batter board stake, by use of a second altitude difference acquisition section;
performing stake top altitude acquisition including acquiring an altitude of a stake top of the batter board stake installed, by use of a stake top altitude acquisition section, the altitude of the stake top being surveyed by use of the surveying device;
performing third altitude difference calculation including calculating, by use of a third altitude difference calculation section, a third altitude difference that is a height difference between the stake top of the batter board stake and the beam top position, based on the altitude of the benchmark acquired in the benchmark altitude acquisition, the first altitude difference acquired in the first altitude difference acquisition, the second altitude difference acquired in the second altitude difference acquisition, and the altitude of the stake top acquired in the stake top altitude acquisition; and
performing third altitude difference display including displaying the third altitude difference on the screen unit of the terminal device.

2. A surveying system for assisting setting of a batter board including a batter board stake, the surveying system **characterized by** comprising: a surveying device and a terminal device communicative with the surveying device,
the terminal device including an input unit and a screen unit, and comprising;
a benchmark altitude acquisition section configured to acquire an altitude of a benchmark that serves as a reference height of the batter board from information input from the input unit or surveying information transmitted from the surveying device to the terminal device;
a first altitude difference acquisition section configured to acquire a first altitude difference that is an altitude difference between the benchmark and a current ground line input from the input unit;
a second altitude difference acquisition section configured to acquire a second altitude difference that is an altitude difference between the current ground line and a beam top position on the batter board stake input from the input unit;
a stake top altitude acquisition section configured to acquire an altitude of a stake top of the batter board stake installed, the altitude of the stake top being surveyed by use of the surveying device;
a third altitude difference calculation section configured to calculate a third altitude difference that is a height difference between the stake top of the batter board stake and the beam top position based on the altitude of the benchmark, the first altitude difference, the second altitude difference, and the altitude of the stake top; and
a third altitude difference display section configured to display the third altitude difference on the screen unit of the terminal device.

3. A batter board setting program for setting a batter board including a batter board stake using a surveying system including a surveying device and a terminal device communicative with the surveying device, the batter board setting program **characterized by** causing:
a benchmark altitude acquisition section of the terminal device to perform benchmark altitude acquisition including acquiring an altitude of a benchmark that serves as a reference height of the batter board;
a first altitude difference acquisition section of the terminal device to perform first altitude difference acquisition including acquiring a first altitude difference that is an altitude difference between the benchmark and a current ground line;
a second altitude difference acquisition section of the terminal device to perform second altitude difference acquisition including acquiring a second altitude difference that is an altitude difference between the current ground line and a beam top position on the batter board stake;
a stake top altitude acquisition section of the terminal device to perform stake top altitude acquisition including acquiring an altitude of a stake top of the batter board stake installed, the altitude of the stake being surveyed by use of the surveying device;
a third altitude difference calculation section of the terminal device to perform third altitude difference calculation including calculating a third altitude difference that is a height difference between the stake top of the batter board stake and the beam top position, based on the altitude of the benchmark acquired in the benchmark altitude acquisition, the first altitude difference acquired in the first altitude difference acquisition, the second altitude difference acquired in the second altitude difference acquisition, and the altitude of the stake top acquired in the stake top altitude acquisition; and
a screen unit of the terminal device to perform third altitude difference display including displaying the third altitude difference.
